# EUROPÄISCHE PATENTSCHRIFT

(11) **EP 0 429 749 B1**
(45) Veröffentlichungstag und Bekanntmachung des Hinweises auf die Patenterteilung: **08.09.1993**
(21) Anmeldenummer: 90111158.3
(22) Anmeldetag: 13.06.1990
(51) Int. Cl.: B23B 31/20, B23B 13/02

(54) **Verriegelung für eine Spannzange**
Blocking for collets
Blocage amélioré pour pince

(30) Priorität: 20.10.1989 IT 2207989
(43) Veröffentlichungstag der Anmeldung: 05.06.1991
(73) Patentinhaber: GILDEMEISTER ITALIANA S.p.A., I-24030 Brembate di Sopra (IT)
(72) Erfinder: Ronzoni, Enrico, I-24030 Brembate Sopra (IT)
(74) Vertreter: Mayer, Hans Benno, Dipl.-Ing.

(56) Entgegenhaltungen:
- DE-A- 410 029
- GB-A- 2 052 322
- US-A- 3 094 042

## Beschreibung

Die vorstehende Erfindung betrifft eine verbesserte Spannvorrichtung zum Verriegeln der Werkstueckaufnahmezange in automatischen Werkzeugmaschinen entsprechend der Einleitung des Anspruchs 1.

Wie bekannt ist, werden in automatischen Werkzeugmaschinen die zu bearbeitenden Werkstuecke in Stangenform in einer federnd ausgebildeten Spannzange gespannt. Die Spannzange besteht aus einem aeusseren Fuehrungskoerper und einer inneren, verschiebbar angeordneten Huelse, die eine Vielzahl von Spannbacken aufweist, die das zu spannende Werkstueck am Umfang umgreifen. Der Spannvorgang erfolgt durch Rueckwaertsbewegung der Zangenhuelse.

Die bekannten Spannzangen dieser Art weisen aeussere Spannbacken auf, die in einem Aufnahmesitz in einem aussenliegenden, fest angeordneten Fuehrungskoerper mit kegelstumpffoermiger Aufnahme angeordnet sind. Bei diesen Spannzangen sind ueblicherweise groessere Verriegelungskraefte zu uebertragen, d. h. Zugkraefte, die zu Nachteilen bei der Verwendung dieser Spannzangen fuehren.

So ist eine Spannzange der genannten Art bekannt geworden, bei der die Aufnahme des aeusseren Fuehrungskoerpers sowie die aeussere Form der Spannbacken die Gestalt eines Pyramidenstumpfes aufweisen. Bei einer solchen Ausfuehrungsform der Spannzange sind geringere Schliess- und Spannkraefte fuer die Zange gegenueber den bekannten Zangen, die Kegelstumpfform aufweisen, erforderlich.

Neben einer platzaufwendigen, robusten Vorrichtung, die fuer die Uebertragung grosser Spannkraefte ausgelegt sein muss, weisen die bekannten Spannvorrichtungen erhebliche Nachteile hinsichtlich Aufbau und Funktionsweise auf.

Die bekannten Vorrichtungen haben eine Vielzahl beweglicher Bauteile, die zusammenarbeiten und ueber Gleitflaechen gegeneinander verschiebbar sind, was zu einem nur bescheidenen Wirkungsgrad der Kraftuebertragung fuehrt. Wegen der hohen zu uebertragenden Kraefte weisen die bekannten Vorrichtungen austauschbare Bauteile auf, d. h. Bauteile, die einem starken Verschleiss unterliegen und ein oefteres Austauschen notwendig machen. Ein weiterer Grund fuer den unzureichenden Wirkungsgrad der Kraftuebertragung ist in der Vorsehung beweglicher Bauteile, besonders schwenkbar angeordneter Bauteile, wie Betaetigungshebel zu sehen, die Bewegungen mit geringer Kraft und grossem Hub in eine Bewegung mit grosser Kraft und geringem Hub umwandeln. Diese Tatsache, zusammen mit den einzuhaltenden Bautoleranzen bedingt die Vorsehung von zahlreichen Einstelleinrichtungen. Mit den bekannten, platzaufwendigen Spannvorrichtungen ist das Einsetzen der Spannzange durch den Bedienungsmann zeitaufwendig, nicht ganz einfach und bedarf zahlreicher Einstellvorgaenge. Dies erfordert den Einsatz von teuren Fachkraeften, die immer weniger zur Verfuegung stehen. Ferner bedarf das Umruesten der Maschine eines erheblichen Zeitaufwandes, was sich negativ auf den Leistungsgrad der Maschine auswirkt.

Es ist Aufgabe der vorstehenden Erfindung, eine Spannvorrichtung der beschriebenen Art zu verbessern, um mit ihr die Nachteile der bekannten Spannvorrichtungen zu vermeiden, wobei die erfindungsgemaesse Vorrichtung sich durch besonders einfache Konstruktion auszeichnen soll und Einstellvorgaenge durch den Bedienungsmann fast nicht mehr notwendig werden und die Einstellvorgaenge auf besondere Anwendungsfaelle beschraenkt bleiben, z.B. fuer die Bearbeitung duennwandiger Rohre oder von Werkstuecken mit sehr empfindlicher Oberflaeche. Dabei ist es Ziel der Erfindung, eine Vorrichtung zu schaffen, die mit geringen Schliesskraeften bei groesserem Bewegungshub arbeitet, um auch die Moeglichkeit zu schaffen, groessere Toleranzen hinsichtlich des Aussendurchmessers der Werkstuecke ueberbruecken zu koennen, um nicht wie bisher ueblich nur gezogene Werkstuecke der Bearbeitung zu unterziehen, sondern auch eine Bearbeitung von Werkstuecken aus kostenguenstigerem, gewalztem Material zu erlauben.

Die erfindungsgemaesse Spannvorrichtung zeichnet sich durch geringen Platzbedarf aus und erlaubt eine einfache Handhabung, die auch von weniger geuebten Bedienungskraeften durchgefuehrt werden kann. Des weiteren werden die Eingriffe durch den Bedienungsmann auf wenige Handgriffe beschraenkt, wodurch die Ruestzeiten der Maschine erheblich gesenkt werden und die Produktivitaet der Werkzeugmaschine entsprechend steigt.

Die erfindungsgemaesse Aufgabe wird durch eine Spannvorrichtung der eingangs genannten Art geloest, die sich dadurch kennzeichnet, dass:
a) die Vorspannfeder (3) von einer Kunststoffeder gebildet ist, die flache Federkennlinie aufweist, wobei die Feder aus einem huelsenfoermigen Bauteil besteht, das in ein schuesselartiges Bauteil (4) eingesetzt ist und am Ende der Feder (3), das dem Schuesselgrund (4a) entgegengesetzt ist, eine Anschlagscheibe (5) vorgesehen ist, mit der eine Einstellmutter (7) zusammenwirkt und ferner mit dem Schuesselgrund (4a) der Aufnahmeschuesel (4) eine Anzeigemutter (8) zusammenwirkt, die den Grund einer Druckhuelse (16) der Zugstange (2) bildet, wobei diese Druckhuelse das schuesselfoermige Bauteil (4), die Feder (3), die Anschlagscheibe (5) und die Mutter (7) aufnimmt und dass
b) mehrere Schliesshebel (10) vorgesehen sind, die mit ihrem einen Ende (11) schwenkbar an einer ringfoermigen Halterung (11a) angeordnet und mit ihrem gegenueberliegenden Ende mit einer profilierten Anschlag- und Positionierhuelse (9) wirkverbunden sind, wobei die profilierte Anschlaghuelse (9), bestehend aus mehreren, sich in Axialrichtung folgenden Sektoren (9a,9b,9c), mit einer Zugvorrichtung (21) wirkverbunden ist, und die Sektoren einen Anschlag fuer die Schliesshebel (10) je nach der Lage der Spannzange oder dem Istdurchmesser des zu spannenden Werkstueckes bilden, wobei die ringfoermige Halterung (11a) mit einem Ende mit dem schuesselartigen Bauteil (4), das die Feder (3) aufnimmt, zusammenarbeitet und mit ihrem anderen Ende mit einem fest angeordneten Ring (23) auf der Spindel (24) ueber Rollen (15), die exzentrisch mit den Schliesshebeln (10) in Wirkverbindung stehen, zusammenarbeitet.

Weitere Merkmale der erfindungsgemaessen Spannvorrichtung koennen den Unteranspruechen als auch der folgenden Beschreibung entnommen werden.

Mit der erfindungsgemaessen Vorrichtung werden wesentliche Vorteile erzielt. Durch Einsatz von Bauteilen, die Waelzlager aufweisen und durch Verwendung von Spannhebeln einfacher Hantierung sowie einer Vorspannfeder, die eine flache Federkennlinie aufweist, wird es moeglich, die Montage der Zange zu vereinfachen und die Spannvorgaenge der Spannzange zu verkuerzen. Es koennen durch Aufbringen geringer Zugkraefte einwandfreie Spannvorgaenge mit der Zange durchgefuehrt werden.

Einstellvorgaenge, die z. B. zum Anpassen an unterschiedliche Aussendurchmesser der zu bearbeitenden Werkstuecke notwendig sind, koennen schnell und einfach erfolgen. Eine visuelle Ueberpruefung des durchgefuehrten Einstellvorganges ist moeglich. Es wird auf eine einzige Stellmutter eingewirkt.

Ein weiterer Vorteil der erfindungsgemaessen Spannvorrichtung ist darin zu sehen, dass die Ruestzeiten der Maschine durch den Einsatz der erfindungsgemaessen Spannvorrichtung wesentlich verkuerzt werden koennen. Ein weiterer Vorteil der erfindungsgemaessen Spannvorrichtung besteht darin, dass die einzelnen Bauteile nicht sehr grossen Zugkraeften oder Reibungskraeften ausgesetzt werden. Es sind deshalb keine Versohleissteile vorzusehen und ein Austausch oder eine Instandhaltung dieser Verschleissteile wird vermieden.

Weiterer Merkmale, Vorteile und Einzelheiten der erfindungsgemaesen Vorrichtung koennen der nun folgenden Beschreibung, unter Bezugnahme auf die Zeichnungen entnommen werden.

In den Zeichnungen ist schematisch eine bevorzugte Ausfuehrungsform der erfindungsgemaessen Vorrichtung dargestellt. Es zeigen:
Fig. 1 eine Laengsschnitthaelfte der erfindungsgemaessen Spannvorrichtung mit geoeffneter Spannzange und groesserem Durchmesser fuer das Werkstueck;
Fig. 2 eine aehnliche Laengschnitthaelfte mit geschlossener Spannzange fuer ein Werkstueck mit Nenndurchmesser, und
Fig. 3 eine aehnliche Laengsschnitthaelfte mit einer Spannzange, die um ein Werkstueck mit Nenndurchmesser gespannt ist.

Die Bauteile sind symmetrisch ausgebildet, aus diesem Grunde wurde nur eine Haelfte der Vorrichtung dargestellt. Zwecks einer Gesamtdartellung der erfindungsgemaessen Spannvorrichtung ist die Spannvorrichtung bei der Vorspannfeder unterbrochen dargestellt.

Unter Bezugnahme auf die beigefuegten Zeichnungen wird mit 1 die Zug- oder Spannvorrichtung gemaess der Erfindung fuer eine nicht genauer dargestellte Spannzange einer automatischen Werkzeugmaschine bezeichnet. Die hohle Zug- oder Schliessstange der Zange ist mit 2 gekennzeichnet. Die gemaess der vorstehenden Erfindung verbesserten Bauteile betreffen im wesentlichen die Anordnung der Vorspannfeder 3 sowie die Anordnung beweglicher Bauteile 10, die als Hebel oder Stoessel ausgebildet sind und zum Schliessen, Spannen und Oeffnen der Zangenbacken dienen, die der Vorrichtung auf der rechten Zeichnungsseite folgen.

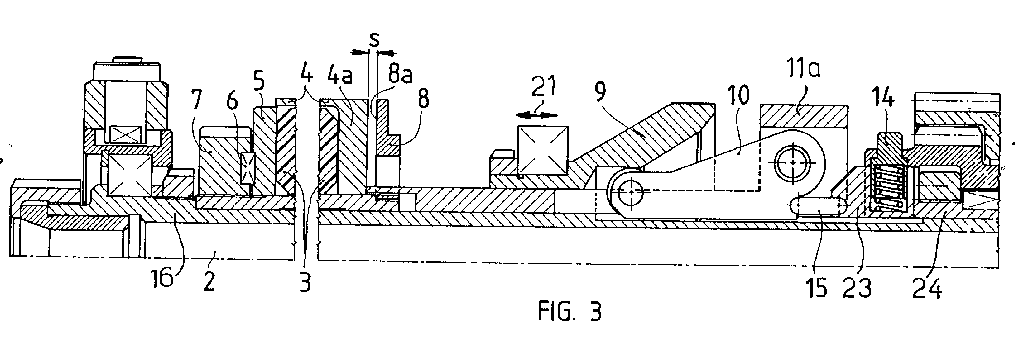

Erfindungsgemaess findet anstelle der bisher ueblichen Tellerfederpakete mit sehr steil verlaufender Federkennlinie, eine Feder aus Kunststoff Verwendung, z.B. aus elastisch eingestelltem gegebenenfalls verschaeumten Polyurethan. Dabei ist die Feder 3 in vorteilhafter Weise einstueckig ausgebildet. Die Feder ist in ein schuesselartiges Bauteil 4 eingesetzt, und das aeussere Ende des Federkoerpers 3 arbeitet mit einer Scheibe 5 zusammen. Auf die Scheibe wirkt unter Zwischenschaltung eines Kugel- oder Rollenkranzes 6 eine Einstellmutter 7 ein. Die Mutter 7 ist auf die Druckhuelse 16 aufschraubbar. Die Druckhuelse 16 ist auf der Zugstange 2 verschiebbar angeordnet und nimmt die Scheibe 5, die Feder 3 und das schuesselfoermige Bauteil 4 auf. Das Druckende 17 der Huelse 16 wirkt mit dem Anschlag 18 der Zugstange 2 zusammen. Gegenueber dem Schuesselboden 4a des Aufnahmekoerpers 4 ist eine Bezugsmutter 8 angeordnet, deren zur Aufnahmeschuessel 4 gerichtete Seite 8a eine visuelle Anzeige ueber eine direkte Anlage oder aufgrund der Bildung eines mit s gekennzeichneten Spaltes (Fig. 3) bildet.

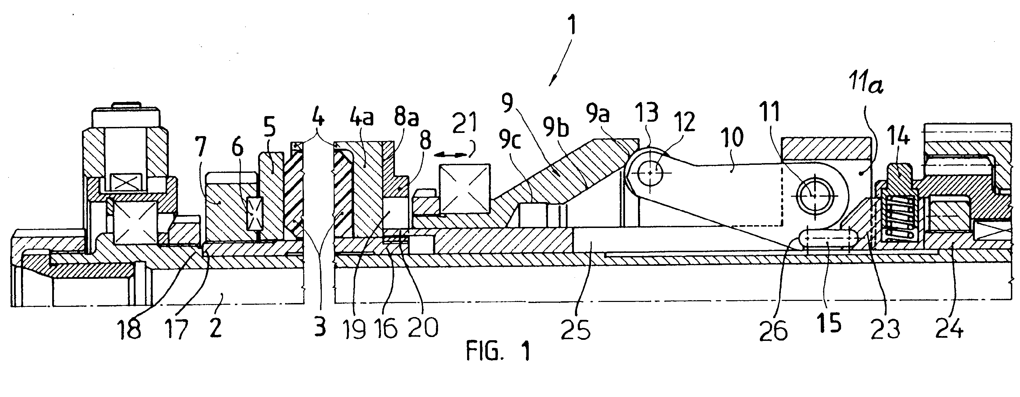

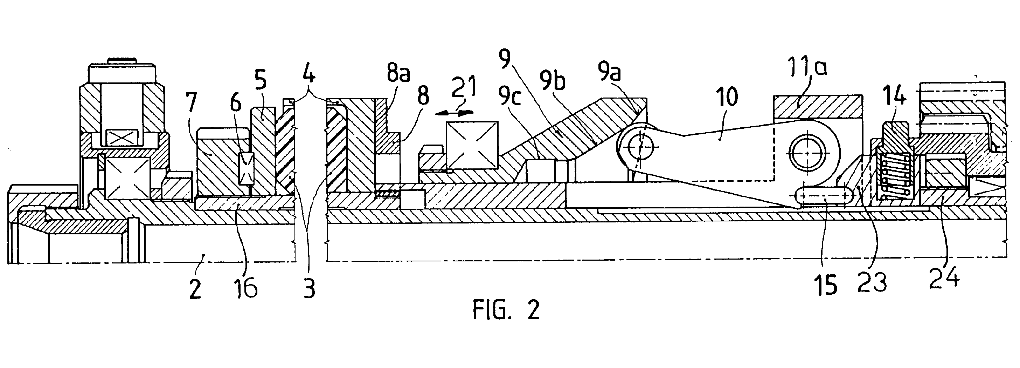

In den Figuren 1 und 2 stellt z.B. die visuelle Anzeige 8a den Kontakt zwischen der Bezugsmutter 8 und dem schuesselfoermigen Bauteil 4, waehrend bei gespannter Zange (Fig. 3) diese visuelle Anzeige den Spalt s darstellt, dessen Breite von ca. 2 - 4 mm den Toleranzen entspricht, die fuer den Aussendurchmesser des zu bearbeitenden Werkstueckes gelten. Die Mutter 8 bildet den Boden der Druckhuelse 16 und weist radiale Oeffnungen 19 auf, ueber die Vorspruenge 20 einer rohrfoermigen Halterung 11a gegen den Boden 4a des schuesselfoermigen Bauteiles 4 anliegen.

Mit 9 ist eine sich in Umfangsrichtung erstreckende glockenartige Huelse gekennzeichnet, mit der Schliesshebel 10 zusammenarbeiten, die im Punkt 11 an einem Ende an der Halterung 11a schwenkbar angeordnet sind und an ihrem anderen Ende 12 eine Laufrolle 13 lagern. Mit 9a, 9b und 9c sind die einzelnen Teilstuecke der profilierten Anschlagshuelse 9 gekennzeichnet. Mit diesen Teilstuecken treten die Hebel 10 entsprechend dem Oeffnungs-, Schliess- oder Spannzustand der Zange in Wirkverbindung. So tritt z.B. mit dem Teilstueck 9a der Anschlaghuelse eine Wirkverbindung mit den Hebeln 10 bei geoeffneter Zange dann ein, wenn der Durchmesser des Werkstueckes gegenueber dem Nominalwert um 0,8 mm groesser ist. Es tritt eine Wirkverbindung zwischen den Hebeln 10 und dem Anschlagteilstueck 9b bei geschlossener Spannzange und einem Durchmesser des Werkstueckes, z.B. um 0,5 mm kleiner gegenueber dem Nominaldurchmesser ein. Eine Wirkverbindung zwischen den Schliesshebeln 10 und dem Teilstueck 9c tritt dann ein, wenn die Spannzange auf ein Werkstueck gespannt ist, dessen einen Durchmesser um 0,5 mm kleiner als der Nominaldurchmesser ist. Bei der beschriebenen Ausfuehrungsform entsprechen den unterschiedlichen, tatsaechlichen Durchmessern der zu spannenden Werkstuecke, unterschiedliche Betraege des Spaltes s. Bei Werkstuecken mit Nominaldurchmesser weist der Spalte s den groessten Wert, z.B. 3,5 mm auf, hingegen bei kleiner werdenden Durchmessern verringert sich der Wert fuer den Spalt s, so weist z.B. der Spalt s einen Wert von 2,6 mm im Falle eines Durchmessers um 0,5 mm, kleiner als der Nominaldurchmesser, auf.

Es handelt sich bei den angegebenen Werten um Richtwerte, die ohne weiteres in Abhaengigkeit von den Abmessungen der Vorrichtung, die von Fall zu Fall fuer die erfindungsgemaesse Vorrichtung vorgesehen sind, veraenderbar sind. Mit 14 ist eine bekannte Entriegelungsvorrichtung und mit 15 ein Rollenkaefig gekennzeichnet.

Die Rollen 15 sind zwischen der fest angeordneten Scheibe 23 gegen die Spindel 24 und dem Sitz 26 der Hebel 10 angeordnet. Der Sitz 26 ist gegenueber dem Schwenkpunkt 11 exzentrisch angeordnet. Die Spindel 24 nimmt in bekannter Weise die Huelse der nicht dargestellten Spannzange auf, die mit der hohlen Zugstange 2 verbunden ist. Die Hebel 10 schwenken in Oeffnungen 25 der rohrfoermigen Halterung 11a ein. Es sind z.B. zwei gegenueberliegende Hebel 10 vorgesehen.

Die bekannte Zugvorrichtung ist schematisch durch den Doppelpfeil 21 angedeutet und steht mit der glockenartigen Huele 9 in Wirkverbindung.

Das Spannen der nicht dargestellten Zange um das in die hohle Zugstange 2 eingefuehrte Werkstueck 2 erfolgt in folgender Weise: die Zugvorrichtung 21 schiebt das profilierte Bauteil 9 gegen die Hebel 10, d.h. nach rechts in der Zeichnung. Die Hebel 10 gleiten entlang der Sektoren 9a, 9b und 9c und schwenken im Gegenuhrzeigersinn und ueben eine Schubkraft auf den fest angeordneten Ring 23 ueber den Rollenkaefig 15 aus.

Da der Ring 23 nicht verschiebbar ist, erfolgt eine Verschiebebewegung der rohrfoermigen Halterung 11a. Diese wird auf der Zugstange 2 verschoben. Waehrend dieser Verschiebung nach links erfolgt mit den Vorspruengen 20 ein Verschieben dsa schuesselfoermigen Bauteils 4 und durch Zusammendruecken der Feder 3 erfolgt auch ein Verschieben der Scheibe 5 sowie der Mutter 7. Die Mutter 7 ist auf der Druckhuelse 16 aufgeschraubt und bewegt mit ihrem Ende 17 die Zugstange 2 nach links. Die Zugstange 2 zieht somit nicht die nicht dargestellte Spannhuelse der Spannzange in den aeusseren Fuehrungskoerper, wodurch ein Schliessen der Zangenbacken um das Werkstueck erfolgt. Die Oeffnung der Zange erfolgt in entgegengesetzter Bewegungsfolge. Das Ausmass der Schwenkbewegung der Hebel 10 ist abhaengig vom Aussendurchmesser des zu spannenden Werkstueckes.

Mit einer Spannvorrichtung fuer die Spannzange gemaess der Erfindung werden Hubbewegungen in der Groessenordnung von ca. 25 mm erziel. Dies ist durch die Verwendung der beschriebenen Vorrichtung und den Einsatz einer Feder aus Kunststoff mit einer verhaeltnismaessig flachen Federkennlinie erreichbar. Es wird somit moeglich, in einwandfreier Weise Werkstuecke zu spannen, deren Durchmesser sich wesentlich vom Nominaldurchmesser entfernt. Weitere bekannte Bauteile der Vorrichtung wurden der Einfachheit halber nicht beschrieben.

Dem Aufbau der Vorrichtung und der beschriebenen Funktionsweise kann entnommen werden, dass mit der vorgeschlagenen Spannvorrichtung fuer eine Spannzange die erfindungsgemaesse Aufgabe voll geloest wird und die aufgefuehrten Vorteile erzielt werden. In der Praxis koennen einzelne Teile durch andere Bauteile, die technisch oder funktionell gleichwertig sind, ersetzt werden, ohne aus dem Schutzumfang der vorstehenden Erfindung auszutreten.

Mit der vorstehenden Erfindung kann neben einer wesentlichen Verminderung der Ruestzeiten der Maschine, die Elastizitaet der Spannzangen besser ausgenuetzt werden, d.h. mit ein und derselben Spannzange wird es moeglich, Werkstuecke mit sehr unterschiedlichen Aussendurchmessern zu spannen, was zu einem weniger haeufigen Zangenaustausch fuehrt.

Das Endstueck der Zugstange, das mit der Spannzange zusammenarbeitet, ist als Sohnellverschluss ausgebildet, z.B. unter Verwendung eines Verbindungsgewindes, das sektorartige Einfraesungen aufweist. Die Merkmale, die der Beschreibung, der Zeichnung und den Anspruechen entnommen werden koennen, sind wesentlich fuer die vorstehende Erfindung, sowohl einzeln als auch in Kombination zueinander.

## Patentansprüche

1. Spannvorrichtung zum Verriegeln einer Werkstueckaufnahmezange in automatischen Werkzeugmaschinen, mit einer Zugstange (2), die mit einem Ende mit einer Zugvorrichtung und mit ihrem anderen Ende mit der verschiebbaren Huelse der Spannzange wirkverbunden ist, und mit Mitteln (3) zur elastischen Vorspannung und Mitteln zur loesbaren Verbindung zur Durchfuehrung der Schliess-, Spann- und Oeffnungsvorgaenge der Zange, **dadurch gekennzeichnet**, dass
a) die Vorspannfeder (3) von einer Kunststoffeder gebildet ist, die flache Federkennlinie aufweist, wobei die Feder aus einem huelsenfoermigen Bauteil besteht, das in ein schuesselartiges Bauteil (4) eingesetzt ist und am Ende der Feder (3), das dem Schuesselgrund (4a) entgegengesetzt ist, eine Anschlagscheibe (5) vorgesehen ist, mit der eine Einstellmutter (7) zusammenwirkt und ferner mit dem Schuesselgrund (4a) der Aufnahmeschuessel (4) eine Anzeigemutter (8) zusammenarbeitet, die den Grund einer Druckhuelse (16) der Zugstange (2) bildet, wobei die Druckhuelse das schuesselfoermige Bauteil (4), die Feder (3), die Anschlagscheibe (5) und die Mutter (7) aufnimmt und
b) mehrere Schliesshebel (10) vorgesehen sind, die mit ihrem einen Ende (11) schwenkbar an einer ringfoermigen Halterung (11a) angeordnet und mit ihrem gegenueber liegenden Ende mit einer profilierten Anschlag- und Positionierhuelse (9) wirkverbunden sind, wobei die profilierte Anschlaghuelse (9), bestehend aus mehreren, sich in Axialrichtung folgenden Sektoren (9a, 9b, 9c), mit einer Zugvorrichtung (21) wirkverbunden ist und die Sektoren einen Anschlag fuer die Schliesshebel (10) je nach der Lage der Spannzange oder dem Istdurchmesser des zu spannenden Werkstueckes bilden, wobei die ringfoermige Halterung (11a) mit einem Ende mit dem schuesselartigen Bauteil (4), das die Feder (3) aufnimmt, zusammenarbeitet und mit ihrem anderen Ende mit einem fest angeordneten Ring (23) auf der Spindel (24) ueber Rollen (15), die exzentrisch mit den Schliesshebeln (10) in Wirkverbindung stehen, zusammenarbeitet.

2. Spannvorrichtung, nach Patentanspruch 1, **dadurch gekennzeichnet**, dass zwischen der Einstellmutter (7) und der Scheibe (5), die zwischen der Einstellmutter (7) und der Feder (3) angeordnet ist, ein Waelzlager (6) angeordnet ist.

3. Spannvorrichtung, nach Patentanspruch 1, **dadurch gekennzeichnet**, dass das am Ende der Verschlusshebel (10), das mit der Anschlaghelse (9) zusammenarbeitet, eine reibungsvermindernde Laufrolle (13) vorgesehen ist.

4. Spannvorrichtung, nach Anspruch 1, **dadurch gekennzeichnet**, dass das die Huelse der Spannzange aufnehmende Endstueck der Zugstange (2) als Schnellverschluss ausgebildet ist.

## Claims

1. Clamp device for locking a workpiece holder collet in automatic machine tools, comprising a draw rod (2) which is operatively connected by one end to a draw device and by its other end to the slidable sleeve of the collet, and comprising means (3) for elastic prestressing and means for detachable connection for effecting the closing, clamping and opening operations of the collet, characterised in that
(a) the prestressing spring (3) is in the form of a plastics spring which has a flat spring characteristic, the spring consisting of a sleeve-shaped component which is inserted into a dish-shaped component (4), while at the end of the spring (3) remote from the bottom (4a) of the dish a stop disc (5) is provided with which an adjusting nut (7) cooperates, and in addition an indicator nut (8) cooperates with the bottom (4a) of the holding dish (4) and forms the bottom of a pressure sleeve (16) of the draw rod (2), said pressure sleeve receiving the dish-shaped component (4), the spring (3), the stop disc (5) and the nut (7), and
(b) a plurality of closing levers (10) are provided which at one end (11) are mounted swivellably on an annular mount (11a) and at their opposite end are operatively connected to a profiled stop and positioning sleeve (9), the profiled stop sleeve (9), consisting of a plurality of sectors (9a, 9b, 9c) following one another in the axial direction, being operatively connected to a draw device (21), and the sectors forming a stop for the closing levers (10) in dependence on the position of the collet or the actual diameter of the workpiece to be clamped, while the annular mount (11a) cooperates at one end with the dish-shaped component (4) receiving the spring (3) and at its other end cooperates with a fixed ring (23) on the spindle (24) with the aid of rollers (15) operatively connected eccentrically to the closing levers (10).

2. Clamp device according to Patent Claim 1, characterised in that a rolling-contact bearing (6) is disposed between the adjusting nut (7) and the disc (5) disposed between the adjusting nut (7) and the spring (3).

3. Clamp device according to Patent Claim 1, characterised in that at that end of the closing levers (10) which cooperates with the stop sleeve (9) a friction-reducing roller (13) is provided.

4. Clamp device according to Claim 1, characterised in that the end piece, receiving the sleeve of the collet, of the draw rod (2) is in the form of a quick-acting closure.

## Revendications

1. Dispositif de serrage pour le verrouillage d'une pince porte-pièce dans des machines-outils automatiques, avec une tige de traction (2) qui est fonctionnellement reliée par une extrémité à un dispositif de traction et par son autre extrémité à la douille coulissante de la pince de serrage, et avec des moyens (3) de précontrainte élastique et des moyens de liaison amovible pour réaliser les opérations de fermeture, de serrage et d'ouverture de la pince, **caractérisé** en ce que
a) le ressort de précontrainte (3) est un ressort en matière plastique qui présente une courbe caractéristique de ressort plate, le ressort consistant en une pièce en forme de douille qui est logée dans une pièce (4) en forme de cuvette, et une rondelle de butée (5), avec laquelle coopère un écrou de réglage (7), étant prévue à l'extrémité du ressort (3) qui est opposée au fond (4a) de la cuvette, et un écrou indicateur (8) coopérant en outre avec le fond (4a) de la cuvette réceptrice (4) et constituant le fond d'une douille de pression (16) de la pince de traction (2), la douille de pression recevant la pièce en forme de cuvette (4), le ressort (3), la rondelle de butée (5) et l'écrou (7), et
b) plusieurs leviers de fermeture (10) étant prévus, qui sont disposés par une extrémité (11) à pivotement sur un support annulaire (11a) et qui, par leur extrémité opposée, sont fonctionnellement reliés à une douille profilée de butée et de positionnement (9), la douille de butée profilée (9), constituée de plusieurs secteurs (9a, 9b, 9c) qui se suivent en direction axiale, étant reliée fonctionnellement à un dispositif de traction (21) et les secteurs constituant une butée pour les leviers de fermeture (10), selon la position de la pince de serrage ou le diamètre effectif de la pièce à serrer, le support annulaire (11a) coopérant par une extrémité avec la pièce en forme de cuvette (4), qui loge le ressort (3), et coopérant par son autre extrémité avec une bague (23) disposée fixement sur la broche (24), par l'intermédiaire de rouleaux (15) qui se trouvent en liaison fonctionnelle excentrique avec les leviers de fermeture (10).

2. Dispositif de serrage selon la revendication 1, **caractérisé** en ce qu'un palier à roulement (6) est disposé entre l'écrou de réglage (7) et la rondelle (5), qui est disposée entre l'écrou de réglage (7) et le ressort (3).

3. Dispositif de serrage selon la revendication 1, **caractérisé** en ce qu'un galet de roulement (13) réduisant le frottement est prévu à l'extrémité des leviers de fermeture (10) qui coopère avec la douille de butée (9).

4. Dispositif de serrage selon la revendication 1, **caractérisé** en ce que la partie terminale de la tige de traction (2) qui reçoit la douille de la pince de serrage, est conçue comme fermeture rapide.
